**Europäisches Patentamt**

**European Patent Office**

**Office européen des brevets**

(19)

(11) Veröffentlichungsnummer: **0 232 529 B1**

(12) **EUROPÄISCHE PATENTSCHRIFT**

(45) Veröffentlichungstag der Patentschrift: **25.09.91**

(51) Int. Cl.⁵: **B65G 61/00, B65G 57/20**

(21) Anmeldenummer: **86117668.3**

(22) Anmeldetag: **18.12.86**

(54) **Positioniereinheit für den Greifkopf eines Palettierers oder dgl. Positioniervorrichtung.**

(30) Priorität: **07.02.86 DE 3603917**

(43) Veröffentlichungstag der Anmeldung:
**19.08.87 Patentblatt 87/34**

(45) Bekanntmachung des Hinweises auf die
Patenterteilung:
**25.09.91 Patentblatt 91/39**

(84) Benannte Vertragsstaaten:
**AT BE CH DE ES FR GB GR IT LI LU NL SE**

(56) Entgegenhaltungen:
**DE-A- 3 318 492**
**US-A- 3 543 910**

(73) Patentinhaber: **Lingenfelder, Ottmar**
**Kolpingring 4**
**W-8024 Deisenhofen/München(DE)**

(72) Erfinder: **Lingenfelder, Ottmar**
**Kolpingring 4**
**W-8024 Deisenhofen/München(DE)**

(74) Vertreter: **Popp, Eugen, Dr. et al**
**MEISSNER, BOLTE & PARTNER Widenmayer-**
**strasse 48 Postfach 86 06 24**
**W-8000 München 86(DE)**

**Beschreibung**

Die Erfindung betrifft einen Palettierer mit einem Rahmen, einem im Bodenbereich des Rahmens angeordneten Rollenförderer, einer dem Rollenförderer zugeordneten Hubeinrichtung, einem innerhalb des Rahmens angeordneten Stapelraum, und einer oberhalb des Rollenförderers und des Stapelraums am Rahmen angebrachten und für einen Greifkopf bestimmten Positioniereinheit, bestehend aus stationär angeordneten und sich parallel zur Horizontalebene erstreckenden Führungsstangen sowie zwei sich ebenfalls parallel zur Horizontalebene erstreckenden, übereinander angeordneten, den Greifkopf durchsetzenden und mit diesem längs der stationären Führungsstangen hin- und herverfahrbaren Führungsstangen, und bestehend aus zwei stationären, elektromotorischen Antrieben, mittels denen der Greifkopf längs der sich quer zueinander erstreckenden Führungsstangen hin- und herverfahrbar ist.

Aus der DE-A 33 18 492 ist ein derartiger Palettierer mit einer Positioniereinheit bekannt, wobei diese zwei Paare stationär sowie jeweils quer zueinander angeordneter und sich parallel zur Horizontalebene erstreckender Führungsstangen sowie zwei weitere Führungsstangen aufweist, die in Horizontalebene erstreckend "über Kreuz" den Greifkopf durchsetzen und mit diesem jeweils quer zu ihrer Längserstreckung mitbewegt werden. Dementsprechend groß ist der bauliche Aufwand. Des weiteren ist es durch die "Über-Kreuz-Führung" am Greifkopf für dessen klemmfreies Hin- und Herverfahren, insbesondere bei schnellen Richtungsänderungen, unerläßlich, daß die entsprechenden Führungsstangen exakt sowohl parallel wie auch senkrecht zueinander ausgerichtet sind. Darüber hinaus sind die Einsatzmöglichkeiten dieses bekannten Palettierers insofern begrenzt, als die Grundfläche des Stapelraums infolge der "Über-Kreuz-Führung" am Greifkopf genau vorbestimmt ist. Ein nachträglicher Umbau, beispielsweise zur Anpassung der Grundfläche des Stapelraums an veränderte örtliche Gegebenheiten, ist bei diesem Palettierer, jedenfalls mit einfachen konstruktiven Veränderungen, nicht ohne weiteres durchführbar.

In der US-A-3,543,910 ist ein Industrieroboter beschrieben, dessen Dreh- und Schwenkbewegungen über eine Positioniereinheit steuerbar sind. Die Positioniereinheit besteht aus einem Paar stationär angeordneter und sich parallel zur Horizontalebene erstreckender Führungsschienen, auf denen ein sich quer dazu ebenfalls parallel zur Horizontalebene erstreckendes und über eine Hydraulikvorrichtung antreibbares Führungselement hin- und herverfahrbar ist. Ein mit dem Industrieroboter mechanisch verbundener Positionierkopf wiederum ist mittels eines stationären, elektromotorischen Antriebs längs dieses Führungselements hin- und herbewegbar. Als besonders nachteilig bei dieser bekannten Positioniereinheit für einen Industrieroboter hat sich deren aufwendige Bauweise infolge der vielen und insbesondere verschiedenartigen Sonderbauteile erwiesen. Darüber hinaus sind bauliche Veränderungen dieser Positioniereinheit nahezu gänzlich ausgeschlossen. Hierdurch würde einerseits die Funktionsweise des gesamten Industrieroboters aufgrund der engen und außerordentlich komplexen kinematischen Verknüpfung zwischen dem Hin- und Herverfahren des Positionierkopfes in der Horizontalebene mit den Dreh- bzw. Schwenkbewegungen der einzelnen Bauteile des Industrieroboters beeinträchtigt werden. Andererseits würde der gesamte Konstruktionsaufwand, insbesondere derjenige hinsichtlich der Hydraulikvorrichtung, um ein Vielfaches größer werden.

Der vorliegenden Erfindung liegt die Aufgabe zugrunde, einen Palettierer mit einer Positioniereinheit der eingangs genannten Art zu schaffen, bei der das Konstruktionsproblem der "Über-Kreuz-Führung" am Greifkopf vermieden ist und deren Konstruktion die Verwendung von einfachen Standard-Bauteilen ermöglicht. Des weiteren soll sich durch einfache Maßnahmen die Positioniereinheit an eine größere Grundfläche des Stapelraums anpassen lassen können.

Diese Aufgabe wird durch die Kombination der im Anspruch 1 genannten Merkmale gelöst.

Durch die erfindungsgemäße Ausgestaltung des Palettierers wird die vorbekannte "Über-Kreuz-Führung" am Greifkopf der Positioniereinheit vermieden. Dadurch können zwei Führungsstangen eingespart werden. Die restlichen Führungsstangen sind Standardbauteile, so daß insgesamt die Positioniereinheit durch geringen Bauaufwand gekennzeichnet ist. Durch das Fehlen der "Über-Kreuz-Führung" am Greifkopf wird auch eine höhere Funktionssicherheit erhalten. Des weiteren hat die erfindungsgemäße Konstruktion den Vorteil, daß die Verfahrstrecke der verfahrbaren Führungsstangen und damit die Bewegung des Greifkopfes in Richtung der stationär angeordneten Führungsstangen, durch einfache Verlängerung derselben sowie durch den Einsatz eines Elektromotors zum Antrieb der verfahrbaren Führungsstangen, auf einfache Weise beliebig groß wählbar ist. Somit ist die Grundfläche des Stapelraums des Palettierers nach der Erfindung durch nur geringfügige konstruktive Anpassung vergrößerbar bzw. entsprechend den örtlichen Gegebenheiten sowohl vor wie auch nach bereits erfolgtem Einbau veränderbar.

Konstruktive Details der Erfindung sind in den Unteransprüchen beschrieben.

Nachstehend wird ein Ausführungsbeispiel der erfindungsgemäßen Positioniereinheit anhand der beigefügten Zeichnung näher erläutert. Es Zeigen:

Fig. 1    eine perspektivische Übersichts-Ansicht einer erfindungsgemäßen Positioniereinheit für den Greifkopf eines Palettierers;

Fig. 2    die Koordinaten-Führung des Greifkopes bei einem Palettierer gemäß Fig. 1 in kschemaitscher Perspektiv-Ansicht und

Fig. 3    Querschnitt der dem verfahrbaren Führungselement zugeordneten Profilstange als Kraftübertragungsmittel.

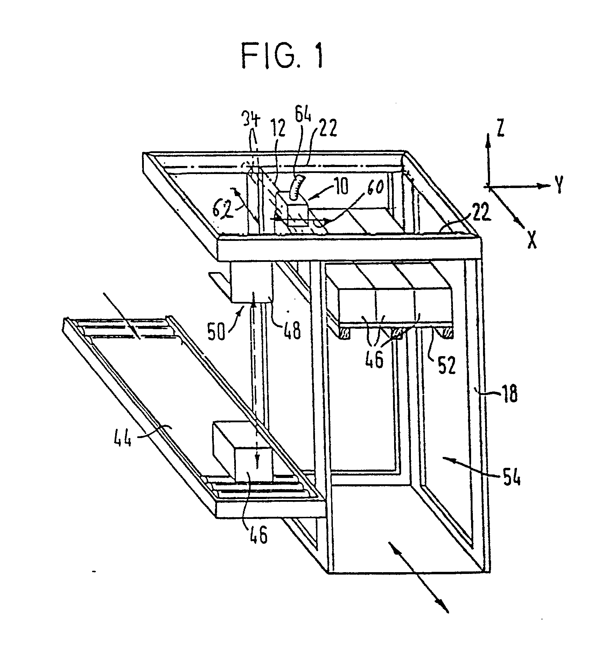

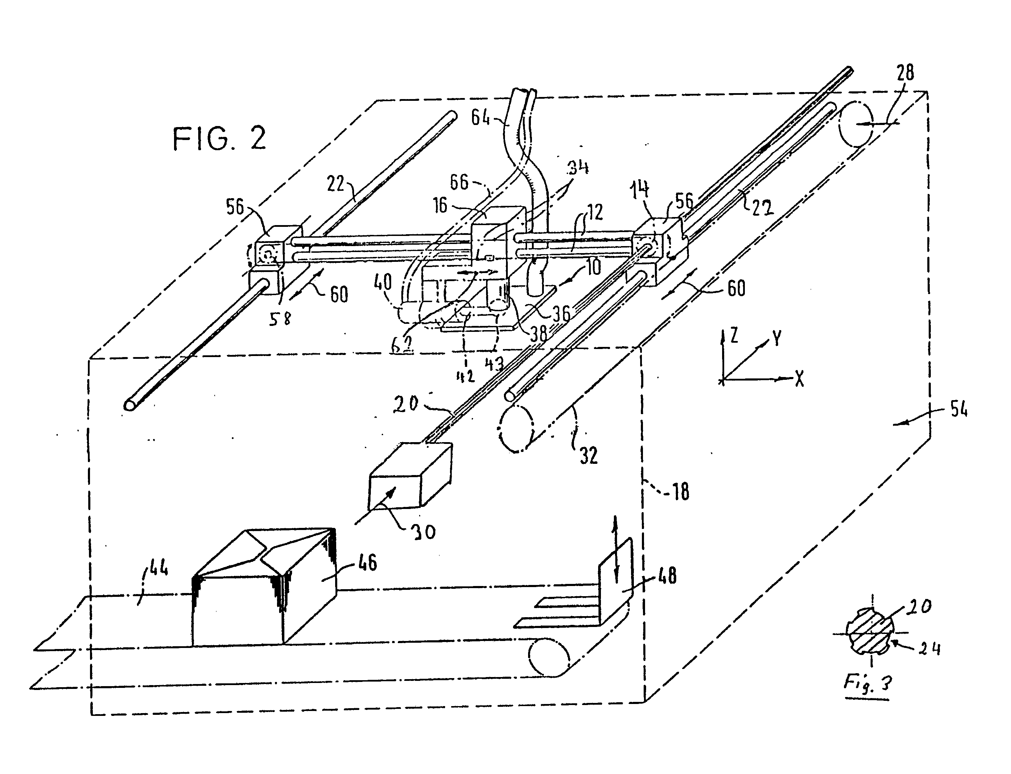

Der Palettierer nach den Figuren 1 und 2 umfaßt einen gemeinsamen Rahmen 18, einen im Bodenbereich des Rahmens 18 angeordneten Rollenförderer 44 zum Antransport von zu positionierendem Karton 46 (Kartonzulauf), einen innerhalb des Rahmens 18 neben dem Rollenförderer 44 angeordneten Stapelraum 54, in den eine zu beladende Palette 52 oder dgl. einführbar ist, und eine oberhalb des Rollenförderers 44 und des Stapelraums 54 angeordnete Positioniereinheit mit einem Greifkopf 10, der eine Karton- oder dgl. -aufnahme 36 (s. Fig. 2) aufweist und in horizontaler Ebene (X-Y-Richtung) beliebig verfahrbar ist. Wie Fig. 2 erkennen läßt, ist der Greifkopf 10 längs zweier übereinander angeordneter, sich senkrecht zueinander und parallel zur Positionerebene erstreckender Führungselemente 12, 22 verfahrbar, wobei zu diesem Zweck der Greifkopf 10 mittels stationärer Antriebe 28, 30 längs des einen, nämlich längs des Führungselementes 12, der beiden Führungselemente und dieses quer zu seiner Längserstreckung hin- und herverfahrbar ist. Die Führungselemente 12, 22 sind jeweils als Führungsstangen ausgebildet, wobei das hin- und herverfahrbare Führungselement 12 durch zwei übereinander angeordnete, den Greifkopf durchsetzende Führungsstangen gebildet wird. Die Lagerung des Greifkopfes 10 an den beiden übereinander angeordneten Führungsstangen 12 erfolgt jeweils über Längskugellager, die eine hohe Leichtgängigkeit gewährleisten. Die Führungselemente bzw. Führungsstangen 12 sind also samt Greifkopf 10 in Fig. 2 in Y-Richtung hin- und herverfahrbar. Unabhängig davon ist der Greifkopf 10 in X-Richtung längs der Führungsstangen 12 hin- undherverfahrbar. Auf diese Weise kann der Greifkopf 10 an eine beliebige X-Y-Position innerhalb des durch die Führungselemente definierten Bereiches gebracht werden. An den freien Enden der übereinander angeordneten Führungsstangen 12 sind Schlitten 56 angeordnet, die Längs der Führungsstangen 22 hin- und herverfahrbar, d. h. längsverschieblich, gelagert sind (s. Doppelpfeil 60).

Dem Greifkopf 10 sind zur Bewegung in X- und Y-Richtung zwei elektromotorische Antriebe 28, 30 zugeordnet. Diese beiden Antriebe sind in Fig. 2 nur in Form von Krafteinleitungs-Pfeilen schematisch dargestellt. Der eine Antrieb 28 dient zum Hin- und Herverfahren des Führungselementes 12 samt Greifkopf 10 längs der stationär im Rahmen 18 angeordneten Führungsstangen 22 in Richtung des Doppelpfeiles 60, d. h. Y-Richtung. Die Kraftübertragung von diesem Antrieb 28 auf das hin- und herverfahrbare Führungselement 12 erfolgt über eine Antriebskette 32, die an einem der beiden Führungsschlitten 56 angreift. Zu diesem Zweck ist die Antriebskette 32 mit dem jeweils zugeordneten Führungsschlitten 56 fest verbunden. Bei einer führungswirksamen Länge der Führungsstangen 22 von etwa bis zu 2 m ist eine einseitige Krafteinleitung mittels der Antriebskette 32 ausreichend. Erst bei größeren Abmessungen ist eine symmetrische Krafteinleitung vorteilhaft, um ein Verklemmen der Führungsschlitten 56 mit Sicherheit zu vermeiden. Die Übertragung der Antriebskraft vom stationären Antrieb 30 auf den Greifkopf 10 zum Zwekke des Hin- und Herverfahrens auf dem quer zu seiner Längserstreckung hin- und herverfahrbaren Führungselement 12 erfolgt über ein stationär gelagertes, sich parallel zur Verfahrrichtung 60 des hin- und herverfahrbaren Führungselements 12 bzw. Y-Richtung erstreckendes, drehangetriebenes Kraftübertragungsmittel 20 und ein mit diesem zusammenwirkendes, mit dem Führungselement 12 mitbewegtes Drehmoment-Übertragungsorgan 14, mit dem der Greifkopf 10 gekoppelt ist. Das drehangetriebene Kraftübertragungsmittel 20 ist eine mit dem Abtrieb des stationären Antriebs 30 gekoppeltes Profil, hier Keilnutenstange (s. Fig 3 mit den Längsnuten 24). Diese Nutenstange ist am hin- und herverfahrbaren Führungselement 12, hier an einem der beiden Schlitten 56, längsverschieblich und drehgelagert.

Das Drehmoment-Übertragungsmittel 14 ist ein auf der Nutenstange 20 längsverschieblich, jedoch drehfest gelagertes Kettenrad. Die Drehmoment-Übertragung von diesem Ketten rad 14 auf den Greifkopf 10 zum Zwecke des Hin- und Herverfahrens desselben längs des Führungselementes bzw. der Führungsstangen 12 erfolgt über eine umlaufende Kette 34. Die Kette 34 wird zu diesem Zweck um ein am anderen Schlitten 56 gelagertes Kettenrad 58 umgelenkt. Die freien Enden der um das Kettenrad 14 einerseits und Umlenk-Kettenrad 58 andererseits umgelenkten Kette werden schließlich am Greifkopf 10 befestigt, so daß durch Drehbewegung der Nutenstange 20 eine Hin- und Herbewegung des Greifkopfes 10 längs der Führungsstangen 12 erhalten wird, und zwar unabhängig von der Y-Position des Greifkopfes 10. Diese Hin- und Herbewegung des Greifkopfes 10 längs der Führungsstangen 12 bzw. in X-Richtung kann überlagert sein durch eine Bewegung des Greifkopfes 10 in Richtung längs der stationären Führungsstangen 22 bzw. in Y-Richtung. Im einfachsten Fall kann die Profilstange 20 ein Vierkant-Profil sein. Es muß nur sichergestellt sein, daß diese Profilstange 20 am verfahrbaren Führungselement 12, hier Schlitten 56, sowohl längsverschieblich als auch drehbeweglich gelagert ist.

Statt der mit dem Greifkopf 10 gekoppelten Kette 34 kann auch ein Seil oder Riemen vorgesehen sein. Entsprechend müßten dann die Kettenräder 14, 58 angepaßt sein.

Der Kettentrieb 32 kann ebenfalls durch einen Seil- oder Riementrieb oder gar Zahnstangentrieb ersetzt sein.

Die Karton- oder dgl. -aufnahme 36 des Greifkopfes 10 ist bei der in Fig. 2 dargestellten Ausführungsform plattenförmig ausgebildet. Sie weist an ihrer Unterseite vorzugsweise vier Saugnäpfe auf, die über einen gemeinsamen Schlauch 64 an eine nicht dargestellte Unterdruckwelle anschließbar sind. Mittels der genannten Saugnäpfe, die in Fig. 2 ebenfalls nicht dargestellt sind, kann ein zu positionierender Karton 46 angehoben, transportiert und an geeigneter Stelle wieder abgesetzt werden. Zum Zwecke des Absetzens eines Kartons werden die Saugnäpfe über den Schlauch 64 mit Atmosphärendruck beaufschlagt. Die plattenförmige Kartonaufnahme 36 ist bei der Ausführungsform nach Fig. 2 um eine aufrechte Achse 38 um mindestens 90° verschwenkbar. Der Schwenkantrieb 40 umfaßt eine pneumatisch gesteuerte Kolben-Zylinder-Einheit, die am Greifkopf 16 lösbar befestigt ist und deren Kolbenstange 42 über ein Kugelgelenk 43 mit der plattenförmigen Kartonaufnahme 36 verbunden ist. Die Verbindung zwischen dem pneumatisch gesteuerten Schwenkanktrieb 40 und einer nicht dargestellten Luftversorgungs- und Steuereinrichtung erfolgt über einen Pneumatikschlauch 66. Statt einer pneumatisch gesteuerten Kolben-Zylinder-Einheit kann als Schwenkantrieb 40 auch ein elektromagnetischer Antrieb verwendet werden. Letzterer hat den Vorteil, daß der Pneumatikschlauch 66 durch wesentlich gewichtsärmere und flexiblere elektrische Leitungen ersetzt werden könnte. Diese könnten sogar innerhalb des mit einer Unterdruckquelle verbundenne Schlauches 64 verlegt sein.

Die obige Beschreibung sowie Fig. 2 lassen sehr gut erkennen, daß bei der erfindungsgemäßen Konstruktion nur ein einziges flexibles Verbindungselement zwischen dem Greifkopf 10 und der ortsfesten Umgebung erforderlich ist, nämlich der Unterdruckschlauch 64. Dieser kann ohne großen Aufwand so gestaltet werden, daß er eine schnelle Bewegung des Greifkopfes 10 innerhalb der horizontalen Postionierebene gestattet. Dieser Vorteil wird durch die Verbindung zwischen dem Schwenkantrieb 40 und einer Energiequelle praktisch nicht beeinträchtigt, sofern ein Schwenkantrieb 40 vorgesehen sein soll.

Zur Minimierung des Gewichtes bzw. der Trägheitsmasse des Greifkopfes 10 ist darauf verzichtet, die Kartonaufnahme 36 in vertikaler Richtung bewegbar auszubilden. Es ist daher am Ende des Rollenförderers 44 eine Hubeinrchtung bzw. eine Elevator 48 angeordnet, mittels dem die antransportierten Gegenstände, nämlich Kartons 46, nacheinander in eine angehobene Abhol-Stellung 50 (s. Fig. 1) bringbar sind, in der die Aufnahme der zu positionierenden Gegenstände durch den Greifkopf 10 erfolgt.

Beim Beladen der Palette 52 (s. Fig. 1) muß natürlich diese entsprechend der zunehmenden Beladung nach und nach von oben nach unten abgesenkt werden. Dies kann manuell durch entsprechende Bedienung eines die Palette 52 tragenden Gebelstaplers oder einer besonders zugeordneten Hubeinrichtung erfolgen. Letztgenannte Konstruktion eignet sich besonders zur vorprogrammierten Hub- bzw. Senkbewegung der Palette 52.

Der Rahmen 18 ist vorzugsweise eine Schweißkonstruktion bestehend aus Profilstäben, vorzugsweise T- oder U-Profilen. Die Konstruktion zeichnet sich dann durch ein entsprechend geringes Gesamtgewicht aus. Die Höhe des Stapelraums 54 ist durch die maximale Ladehöhe einer Palette 52 sowie einen notwendigen Freiraum zum problemlosen Herausfahren der beladenen Palette bestimmt. Sie beträgt in der Regel etwa 2 m. Der Rollenförderer 44 ist etwas oberhalb des Bodens bzw. der Unterkante des Rahmens 18 angeordnet und mit diesem fest verbunden. Statt des Rollenförderers 44 kann auch eime Rutsche oder ein Bandförderer vorgesehen sein. Die oben erwähnten Führungsstangen 22 sind mit ihren Enden fest am Rahmen 18 verbunden, vorzugsweise jedoch lösbar, um bei möglichen Beschädigungen oder Abnutzungen einen Austaushc zu ermöglichen.

Statt der übereinander angeordneten Führungsstangen 12 kann auch nur eine einzige Führungsstange vorgesehen sein, sofern sichergestellt ist, daß der Greifkopf 10 drehfest längs dieser Führungsstange hin- und herverfahrbar ist. Die Hin- und Herverfahrbarkeit des Greifkopfes 10 längs der Führungsstange 12 bzw. in X-Richtung ist in den Fig. 1 und 2 durch den Doppelpfeil 62 angezeigt.

Die mit dem stationären Antrieb 30 gekoppelte Profilstange 20 ist vorzugsweise am gegenüberliegenden Ende am Rahmen 16 drehgelagert, um Biegeschwingungen beim schnellen Verfahren des Greifkopfes samt Führungsstangen 12 in Y-Richtung zu vermeiden.

## Patentansprüche

1. Palettierer mit einem Rahmen (18), einem im Bodenbereich des Rahmens (18) angeordneten Rollenförderer (44), einer dem Rollenförderer (44) zugeordneten Hubeinrichtung (48), einem innerhalb des Rahmens (18) angeordneten Stapelraum (54) und einer oberhalb des Rollenförderers (44) und des Stapelraums (54) am Rahmen (18) angebrachten und für einen Greifkopf (10) bestimmten Positioniereinheit, bestehend aus einem Paar stationär angeordneter und sich parallel zur Horizontalebene (X-Y) erstreckender Führungsstangen (22) sowie zwei sich ebenfalls parallel zur Horizontalebene (X-Y) erstreckenden, übereinander angeordneten, den Greifkopf (10) durchsetzenden und mit diesem längs der stationären Führungsstangen (22) hin- und herverfahrbaren Führungsstangen (12), und bestehend aus zwei stationären, elektromotorischen Antrieben (28, 30), mittels denen der Greifkopf (10) längs der sich quer zueinander erstreckenden Führungsstangen (12, 22) hin- und herverfahrbar ist, wobei die Übertragung der Antriebskraft vom stationären Antrieb (30) für das Hin- und Herverfahren des Greifkopfes (10) längs der diesen durchsetzenden Führungsstangen (12) über eine stationär gelagerte, sich parallel zu den stationär angeordneten Führungsstangen (22) erstreckende, drehangetriebene Nutenstange (20) und ein mit dieser zusammenwirkendes, mit den den Greifkopf (10) durchsetzenden Führungsstangen (12) mitbewegtes Drehmoment-Übertragungsorgan (14) erfolgt, mit dem der Greifkopf (10) gekoppelt ist.

2. Palettierer nach Anspruch 1,
**dadurch gekennzeichnet,** daß das Drehmoment-Übertragungsmittel (14) ein auf die Nutenstange (20) längsverschieblich, jedoch drehfest gelagertes Kettenrad, Seilrolle, Riemenscheibe oder dgl. ist.

3. Palettierer nach einem der Ansprüche 1 und 2, **dadurch gekennzeichnet,** daß der Greifkopf (10) mit dem Drehmoment-Übertragungsmittel (14) durch eine umlaufende Kette (34), Seile, Riemen oder dgl. gekoppelt ist.

4. Palettierer nach einem der Ansprüche 1 bis 3, **dadurch gekennzeichnet,** daß die den Greifkopf (10) durchsetzenden Führungsstangen (12) längs der anderen, stationär angeordneten Führungsstangen (22) mittels mit dem stationären Antrieb (28) gekoppelten Ketten (32), Seilen, Riemen, Zahnstangen oder dgl. hin- und herverfahrbar ist.

## Claims

1. Palletiser having a frame (18), a roller conveyor (44), arranged in the bottom region of the frame (18), a lifting device (48), assigned to the roller conveyor (44), a stacking space (54), arranged inside the frame (18), and a positioning unit, fitted to the frame (18) above the roller conveyor (44) and the stacking space (54) and intended for a gripping head (10), said unit comprising a pair of stationarily arranged guide rods (22), extending parallel to the horizontal plane (X-Y), as well as two guide rods (12), likewise extending parallel to the horizontal plane (X-Y), arranged one above the other, passing through the gripping head (10) and able to be moved back and forth with the latter along the stationary guide rods (22), and comprising two stationary, electromotive drives (20, 30), by means of which the gripping head (10) can be moved back and forth along the guide rods (12, 22) extending transversely to one another, the transmission of the driving force from the stationary drive (30) for the moving back and forth of the gripping head (10) along the guide rods (12) passing through it taking place via a stationarily mounted, rotationally driven clotted rod (20), extending parallel to the stationarily arranged guide rods (22), and a torque-transferring member (14), interacting with the said slotted rod, moved together with the guide rods (12) passing through the gripping head (10), and coupled to the gripping head (10).

2. Palletiser according to Claim 1, characterised in that the torque-transferring means (14) is a chain wheel, rope roller, belt pulley or the like, mounted longitudinally displaceably on the slotted rod (20) but such that it is rotationally fixed.

3. Palletiser according to one of Claims 1 and 2, characterised in that the gripping head (10) is coupled to the torque-transferring means (14) by a circulating chain (34), ropes, belts or the like.

4. Palletiser according to one of Claims 1 to 3, characterised in that the guide rods (12) passing through the gripping head (10) can be moved back and forth along the other, stationarily arranged guide rods (22) by means of chains (32), ropes, belts, racks or the like coupled to the stationary drive (28).

## Revendications

1. Palettiseur comprenant un bâti (18), un transporteur à rouleaux (44) disposé dans la région de fond du bâti (18), un dispositif de levage (48) associé au transporteur à rouleaux (44), un espace d'empilage (54) disposé à l'intérieur du bâti (18) et une unité de positionnement pour une tête de préhension (10), fixée au bâti (18) au-dessus du transporteur à rouleau (44) et de l'espace d'empilage (54), constituée par une paire de barres de guidage stationnaires (22) s'étendant parallèlement au plan horizontal (X-Y), par deux barres de guidage (12) s'étendant également parallèlement au plan horizontal (X-Y), disposées l'une au-dessus de l'autre, traversant la tête de préhension (10) et pouvant se déplacer avec celle-ci selon un mouvement alternatif le long des barres de guidage stationnaires (22), et par deux moteurs électriques stationnaires (28, 30) au moyen desquels la tête de préhension (10) peut se déplacer selon des mouvements alternatifs le long des barres de guidage (12, 22) s'étendant transversalement les unes par rapport aux autres, la transmission de la force motrice du moteur stationnaire (30) pour le mouvement alternatif de la tête de préhension (10) le long des barres de guidage (12) qui la traversent s'effectuant par l'intermédiaire d'une barre cannelée (20) montée de façon stationnaire, s'étendant parallèlement aux barres de guidage stationnaires (22) et entraînée en rotation, et d'un organe de transmission de couple (14) se déplaçant avec les barres de guidage (12) traversant la tête de préhension (10) coopérant avec la barre cannelée et auquel est couplée la tête de préhension (10).

2. Palettiseur selon la revendication 1, caractérisé en ce que l'organe de transmission de couple (14) et une roue à chaîne, une poulie à câble ou à courroie, ou analogue, montée mobile longitudinalement mais immobile en rotation sur la barre cannelée (20).

3. Palettiseur selon l'une des revendications 1 et 2, caractérisé en ce que la tête de préhension (10) est couplée à l'organe de transmission de couple (14) par une chaîne (34), un câble, une courroie ou analogue sans fin.

4. Palettiseur selon l'une des revendication 1 à 3, caractérisé en ce que les barres de guidage (12) traversant la tête de préhension (10) peuvent se déplacer selon un mouvement alternatif le long des autres barres de guidage stationnaires (22) au moyen de chaînes (32), de câbles, de courroies, de crémaillères ou analogues, couplés au moteur stationnaire (28).

# FIG. 1

FIG. 2

EP 0 232 529 B1

8

Fig. 3